(19) Europäisches Patentamt
European Patent Office
Office européen des brevets

(11) Publication number: **0 224 411 B1**

(12) **EUROPEAN PATENT SPECIFICATION**

(45) Date of publication of patent specification: **12.12.90**

(51) Int. Cl.[5]: **C 08 G 59/12**, C 08 G 59/22, C 08 G 59/42, C 08 G 59/58

(21) Application number: **86402437.7**

(22) Date of filing: **30.10.86**

(54) **Process for manufacture of compositions based on epoxy resins.**

(30) Priority: **31.10.85 FR 8516226**

(43) Date of publication of application:
**03.06.87 Bulletin 87/23**

(45) Publication of the grant of the patent:
**12.12.90 Bulletin 90/50**

(84) Designated Contracting States:
**AT BE CH DE ES FR GB IT LI NL SE**

(56) References cited:
**FR-A-2 519 639**
**JP-A-5 853 925**

**PATENTS ABSTRACTS OF JAPAN, vol. 7, no. 139 (C-171)1284r, 17th June 1983; & JP-A-58 53 925**

**PATENTS ABSTRACTS OF JAPAN, vol. 7, no. 175 (C-179)1320r, 3rd August 1983; & JP-A-58 83 031**

(73) Proprietor: **THE DOW CHEMICAL COMPANY**
**2030 Dow Center Abbott Road P.O. Box 1967**
**Midland Michigan 48640-1967 (US)**

(72) Inventor: **Druelle, Sylvie**
**16 bis, rue Voltaire**
**F-62800 Lievin (FR)**
Inventor: **Galy, Jocelyne**
**14, rue Louis Braille**
**F-69100 Villeurbanne (FR)**
Inventor: **Michel-Dansac, François**
**18, rue Voltaire**
**F-62160 Bully Les Mines (FR)**
Inventor: **Pascault, Jean-Pierre**
**40, rue Chateau Gaillard**
**F-69100 Villeurbanne (FR)**
Inventor: **Montarnal, Serge**
**104, avenue Roger Salengro**
**F-69100 Villeurbanne (FR)**
Inventor: **Sautereau, Henri**
**1, rue Stalingrad**
**F-69120 Vaulx en Velin (FR)**

(74) Representative: **Peuscet, Jacques et al**
**Cabinet Peuscet 68, rue d'Hauteville**
**F-75010 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 224 411 B1

## Description

This invention concerns a new process for the manufacture of compositions based on epoxy resins.

Epoxy resins, or epoxide prepolymers, are thermosettable resins which are hardened, in a known manner, by reaction with amine compounds having hydrogen atoms fixed to the nitrogen: aliphatic amines and aromatic amines. All these amine derivatives enable the epoxy resins to be hardened at the high temperatures which are indispensable for the manufacture of products with good mechanical properties. The use of such hardeners at low temperatures, for example at room temperature, leads to polyepoxy products with poor mechanical properties. In order to improve the mechanical properties of the polyepoxies it has been proposed to introduce elastomers into the epoxy resins. The use of such compounds is difficult, because only the classic high temperature hardeners are suitable and their use then causes macroseparation of the elastomer phase, which leads to finished material which does not contain rubbery nodules dispersed within the epoxy matrix.

Moreover, these compound materials, which are used particularly in the automobile industry, have to be manufactured at acceptable rates of production, which requires the use of a hardening system capable of reaction at relatively low temperatures.

There is therefore a need to provide a new process for producing compositions based on epoxy resins by which finished products with good mechanical properties and containing rubber nodules are obtained.

The present invention concerns a manufacturing process for compositions based on epoxy resins, which is characterized by the fact that in a first step an epoxide prepolymer is made to react with a butadiene-acrylonitrile copolymer, and then in a second step the product obtained in the first step is made to react with a low temperature reactive liquid amine, and then the product obtained at this step is made to react with an epoxide prepolymer in the presence of a second diamine.

According to another aspect of the process of the present invention, the process can be carried out by causing an epoxide prepolymer to react with a butadiene-acrylonitrile copolymer in a first step and then, in a single second step, to cause the product obtained in the first phase to react with a low temperature reactive liquid diamine, an epoxide prepolymer and a second diamine.

The use of such a process leads to finished products with good mechanical properties, particularly good impact resistance, and containing rubbery nodules dispersed within the epoxy matrix.

In the process of this invention an epoxide prepolymer is caused to react, in a first step, with a butadiene-acrylonitrile copolymer. The epoxide polymers which can be used, according to the invention, are products which have, on average, at least one, preferably at least two epoxy or oxirane groups per molecule. These epoxide prepolymers may be saturated or nonsaturated, aliphatic, cycloaliphatic, aromatic or heterocyclic, and they can be substituted, if desired, by hydroxyl groups and ether radicals. The preferred epoxide prepolymers for use in this invention are the polyglycidyl ethers of polyhydric phenols and polyhydric alcohols, for example the diglycidyl ether of bisphenol A.

The butadiene-acrylonitrile copolymers suitable for use in the process of the invention are copolymers with an average molecular weight of more than 1000 and having reactive groups such as carboxylic acid or amine groups. Examples of butadiene-acrylonitrile copolymers with carboxylic acid groups are the products sold under the trademark Hycar, particularly Hycar CTBN 1300×8, which contains 18 percent of acrylonitrile by weight and has a number average molecular weight of 3500 and a Brookfield viscosity, at 27°C, of between 125 and 150 Pa · s. As an example of the copolymers with amine groups one may mention Hycar ATBN, which has the same percentage of acrylonitrile and the same number average molecular weight as Hycar CTBN, and which has terminal amine functions instead of carboxylic acid functions. According to the invention, the butadiene-acrylonitrile copolymer containing terminal carboxylic acid groups is preferably used.

The process of this invention consists, in a first step, of causing the epoxide prepolymer to react with the butadiene-acrylonitrile copolymer. According to the invention, the quantities used are such that the stoichiometric ratio R1 between the carboxylic acid functions of the butadiene-acrylonitrile copolymer and the oxirane functions of the epoxide prepolymer, is preferably from 0.01 to 0.6, and more preferably from 0.02 to 0.5, the ratio R1 being defined by the ratio:

R1 = [COOH] / 

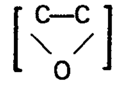

The use of epoxide prepolymer and butadiene-acrylonitrile copolymer in an R1 ratio higher than 0.6 leads to a reaction product with too high a viscosity, while the use of epoxide prepolymer with butadiene-acrylonitrile copolymer in an R1 ratio lower than 0.01 leads to an economically and technically uninteresting process.

This first step of the process of the invention is preferably carried out in an inert atmosphere at a temperature of from 60 to 160°C, more preferably from 80 to 100°C, for at least 3 hours, in the presence of a catalyst such as triphenylphosphine.

According to a first embodiment of the process of the invention, the product obtained in the first step is

caused to react with a low temperature reactive liquid diamine capable of reacting with the oxirane groups. Diamines suitable for use in the process of the invention are for example isophorone diamine, a bis(aminomethyl-cyclohexyl)methane, preferably bis(4-amino-3-methyl-cyclohexyl)methane, a polyether diamine, a bis(amino-cyclohexyl)methane, preferably bis(4-aminocyclohexyl)methane, 1,8-diamino-p-menthane and 2,5-diamino-2,5-dimethyl-hexane. These amines are used in quantities such that the ratio R2 defined by the stoichiometric ratio,

R2= [NH] /

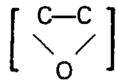,

is preferably from 0.2 to 3.5, and more preferably from 0.5 to 3, the oxirane functions being expressed in relation to the initial functions of the diepoxide prepolymer. This second step is preferably performed at room temperature for at least 4 hours.

According to the invention, the product obtained from the reaction in the second step is then caused to react with an epoxide prepolymer in the presence of a second diamine. The epoxide prepolymers mentioned earlier are particularly suitable for this. The diamine used in this third step is preferably selected from diaminodiphenyl sulfone, dicyanodiamide and diaminodiphenylmethane or from the liquid amines used in the second step. The nature of the amine used in this third step depends only on the desired type of finished product, namely pre-impregnated products or hardened finished products. The quantities of epoxide prepolymer and diamines used are preferably such that the ratio R3, which is defined by the stoichiometric ratio,

R3= [NH] /

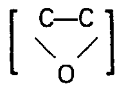

is from 0.5 to 1.2, and more preferably about 1.0.

All the amine and epoxide functions, taking into account all the amine and epoxide functions introduced since the start of the process, are calculated in the ratio R3. This last step is preferably carried out at an initial temperature of at least 60°C, which is then increased up to about 150°C, with continuous stirring for about 45 minutes.

According to another embodiment of the process of the invention, in a first step the epoxide prepolymer is caused to react with the butadiene-acrylonitrile copolymer, and then in a second step the product obtained in the first step is caused to react with a low temperature reactive diamine, an epoxide prepolymer and a second diamine. In this case the amines used are the same as those described earlier. The compositions obtained in this way are preferably left to react for at least 6 hours at 27°C and then cured in the oven at a temperature of from 150 to 250°C for at least one hour.

The following examples illustrate this invention:

Example 1

In a first step the following materials were placed in an airtight reactor fitted with a stirrer, a vacuum device and a temperature regulator:

37.5 g of diglycidyl ether of bisphenol A,

22.5 g of butadiene-acrylonitrile copolymer, sold under the tradename Hycar CTBN 1300×8.

This copolymer presents carboxylic terminal functions and has an average molecular weight of 3500 and 0.05 equivalents carboxylic acid functions for 100 g. The ratio R1, defined above, is then 0.06.

Then 0.1 g of triphenyl phosphine was added, as catalyst.

The reactive mixture was heated for 4 hours at 85°C in a nitrogen atmosphere.

Then 4.2 g of isophorone diamine was added and the mixture stirred for 45 minutes at room temperature. The amount of isophorone diamine used corresponds to a ratio R2, as previously defined, of 0.5.

The mixture is then left to age for 18 hours, at 27°C.

In a third step the following were then added:

59.95 g of diglycidyl ether of bisphenol A, having an average molecular weight of 380, an epoxy equivalent weight of 190 and an average viscosity of 15 Pa · s at 25°C,

25.85 g of diaminodiphenylsulfone.

The ratio R3, as previously defined, is then 1.0.

The mixture was homogenized for 30 minutes at 140°C. The product thus obtained was then cured at 190°C for 1 hour and then at 230°C for 2 hours. The mechanical properties of the finished product are summarized in Table 1.

Example 2

Example 1 was repeated, using the following reagents:

In step 1,

37.5 g of diglycidyl ether of bisphenol A,

22.5 g of the same copolymer as used in Example 1, that is, a ratio R1 of 0.06,

0.1 g of triphenyl phosphine.

In step 2, 5.87 g of bis(4-amino-3-methylcyclohexyl) methane was added; the ratio R2 is then 0.5; the mixture was then left to age for 18 hours, at room temperature.

In the third step, 58.82 g of diglycidyl ether of bisphenol A and 25.3 g of diaminodiphenylsulfone were added, which corresponds to a ratio R3 of 1.0.

After curing for 1 hour at 190°C and for 2 hours at 230°C a product is obtained, the properties of which are summarized in Table 1.

Examples 3 to 6 (Examples 3 and 4 are comparative)

Example 1 was repeated, using different amines in variable quantities.

The amounts of the various products used are summarized in Table 2, with the following abbreviations:

DDA: dicyanodiamide

MNDA: 1,8-diamino-p-menthane

BDMA: benzyl dimethylamine

DGEBA: diglycidyl ether of bisphenol A.

The properties of the products obtained are summarized in Table 3.

Examples 7 to 19 (Examples 7, 8 and 13 are comparative)

The operating conditions and the mechanical properties of the products obtained, for different tests, are summarized in Table 4.

The liquid diamine being used in the second step is in Examples 9 to 12 and 14 to 19 MNDA.

The abbreviation DDS means diaminodiphenylsulfone.

TABLE 1

| Examples | Tg (°C) | TgA (°C) | Rs (KJ/m$^2$) | E ($10^9$ N/m$^2$) | $F_r$ mm | R $10^7$ N/m$^2$ |
|---|---|---|---|---|---|---|
| 1 | −60 | 165 | 11.9±6 | 2±0.2 | 2.5±0.5 | 6.5±1 |
| 2 | −60 | 166 | 14.2±2 | 2.2±0.2 | 2.8±0.3 | 7.9±0.8 |

Tg: glass transition temperature of the elastomer phase

TgA (°C): glass transition temperature of the matrix

Rs: impact resistance according to norm NFT 51035

E: Young modulus

$f_R$: deflection at break

R: failure stress.

The measurements have been carried out according to NFT 51035.

TABLE 2

| Number Example | Values $R_1$, $R_2$, $R_3$ | Adduct | CTBN % by weight | Hardener | Curing |
|---|---|---|---|---|---|
| 3 | $R_1$=0<br>$R_2$=0<br>$R_3$=0.6 | — | — | DDA+BDMA accelerator<br><br>1 weight percent, based on the weight of the prepolymer | 3 hours at 100°C<br>+<br>1 hour at 160°C |
| 4 | $R_1$=0.065<br>$R_2$=0<br>$R_3$=0.6 | DGEBA-CTBN | 15 | | |
| 5 | $R_1$=0.065<br>$R_2$=1<br>$R_3$=0.6<br>second step 48 hrs at room temp. | DGEBA-CTBN MNDA | 15 | | |
| 6 | $R_1$=0.065<br>$R_2$=2<br>$R_3$=0.6<br>second step 48 hrs at room temp. | DGEBA-CTBN MNDA | 15 | | |

TABLE 3

| Example | $E_{flexure}$ $10^9$ N/m² | $E_{impact}$ $10^9$ N/m² | σr. flex $10^8$ N/m² | σr. impact $10^8$ N/m² | $F_{r. flex}$ (mm) | $F_{r. impact}$ (mm) | $R_{sflex}$ kJ/m² | $R_{s\ impact}$ kJ/m² |
|---|---|---|---|---|---|---|---|---|
| 3 | 3<br>(0.06) | 3.1<br>(0.1) | 1.38<br>(0.01) | 0.94<br>(0.05) | 8.8<br>(0.5) | 2.33<br>(0.05) | 42<br>(3) | 14<br>(1) |
| 4 | 2<br>(0.06) | 2.64<br>(0.13) | 1<br>(0.03) | 0.94<br>(0.03) | 7.7<br>(1) | 2.8<br>(0.2) | 31<br>(7) | 17<br>(7) |
| 5 | 2.24<br>(0.05) | 2.87<br>(0.13) | 1.07<br>(0.01) | 1<br>(0.04) | 8.3<br>(0.5) | 2.9<br>(0.4) | 40<br>(5) | 18<br>(4) |
| 6 | 2.08<br>(0.04) | 2.75<br>(0.15) | 1.07<br>(0.03) | 1.12<br>(0.14) | 8.44<br>(0.02) | 3.6<br>(0.4) | 40<br>(5) | 27<br>(4) |

E: elasticity modulus
σr: failure stress
$F_r$: deflection at break (standard deviation)
$R_s$: impact strength
Flexure: NPT 51001
Impact: NFT 51035.

TABLE 4

| Number Example | % CTBN | Values of $R_1$, $R_2$, $R_3$ | Ageing | Amine used in the last step | Curing | Rs kJ/m² | E $10^9$ N/m² | $f_R$ mm | σR $10^8$ (N/m²) |
|---|---|---|---|---|---|---|---|---|---|
| 7 | 0 | $R_1=0$<br>$R_3=1$ | No | DDS | 1 h à 190°C<br>2 h à 230°C | 16±3 | 3,2±0,2 | 2,5 | 1 |
| 8 | 0 | $R_1=0$<br>$R_3=1$ | No | MNDA | 1 h à 190°C<br>2 h à 230°C | 12,8±1,7 | 3,7±0,2 | 1,9 | 1 |
| 9 | 15 | $R_1=0{,}023$<br>$R_2=R_3=1$ | No | MNDA | 1 h à 190°C<br>2 h à 230°C | 23,4±6,6 | 2,7±0,2 | 3,4 | 1 |
| 10 | 15 | $R_1=0{,}023$<br>$R_2=R_3=1$ | 6 days at 27°C | MNDA | " " | 47±6 | 2,6±0,2 | 5,9 | 1,2 |
| 11 | 15 | $R_1=0{,}016$<br>$R_2=3$<br>$R_3=1$ | 6 days at 27°C | MNDA | " " | 24,6±3,3 | 3±0,2 | 3,6 | 1 |
| 12 | 15<br>15 | $R_1=0{,}06$<br>$R_2=0{,}5$<br>$R_3=1$ | 6 days at 27°C | DDS | " " | 21,5±5,7 | 2,1±0,3 | 4,3 | 0,9 |
| 13 | 0 | $R_1=0$ $R_3=1$ | No | MNDA/DDS | " " | 10±3 | 3,6±0,4 | 1,6 | 0,8 |
| 14 | 15 | $R_1=0{,}06$ | 24 hrs at 27°C | DDS | " " | 23,4±5,4 | 2,6±0,5 | 3,6 | 0,9 |
| 15 | 15 | $R_2=1$<br>$R_3=1$ | 42 hrs at 27°C | DDS | " " | 16±3 | 2,5±0,1 | 2,7 | 0,8 |
| 16 | 15 | $R_1=0{,}06$ | 24 hrs at 27°C | DDS | " " | 23,5±2 | 2±0,6 | 4 | 0,9 |
| 17 | 15 | $R_2=1$ | 42 hrs at 27°C | DDS | " " | 26±5 | 2,2±0,1 | 4,3 | 1 |
| 18 | 15 | $R_3=1$ | 66 hrs at 27°C | DDS | " " | 26,7±8 | 2,4 | 4,2 | 1 |
| 19 | 15 | $R_1=0{,}16$<br>$R_2=2{,}5$<br>$R_3=1$ | 6 days at 27°C | DDS | " " | 22±3 | 2,6 | 2,8 | 1 |

**Claims**

1. A process of producing composition based on epoxy resins characterized in that
in a first step, an epoxide prepolymer is reacted with a butadiene-acrylonitrile copolymer having a carboxylic acid group or amine reactive groups,
then, the product obtained in said first step is reacted, in a second step, at a temperature of not greater than 27°C with a liquid diamine reactive at said temperature, and
in a third step, the product obtained in said second step is reacted with an epoxide prepolymer in the presence of a second diamine.

2. A modification of the process according to claim 1, in which said second and third steps are performed together, the product obtained in the first step being reacted, in a single step, at a temperature of not greater than 27°C, with a liquid diamine reactive at said temperature, an epoxide prepolymer and a second diamine.

3. The process according to claim 1 or 2 characterized in that the stoichiometric ratio R1 between the carboxyl functions of the butadiene-acrylonitrile copolymer and the oxirane functions used in the first step is from 0.01 to 0.6, preferably from 0.02 to 0.5.

4. The process according to any of Claims 1 to 3 characterized in that the stoichiometric ratio R2 between the amine and the oxirane functions is from 0.2 to 3.5, whereby the amine functions are the functions of a liquid diamine reactive at low temperature and the oxirane functions are the initial functions of the epoxide prepolymer.

5. The process according to any of Claims 1 to 4 characterized in that the stoichiometric ratio R3 between all amine functions and oxiranes functions is from 0.5 to 1.2, whereby in counting the amine and oxirane functions all amine and epoxide functions introduced since the start of the process are taken into account.

6. The process according to any of Claims 1 to 5 characterized in that the liquid diamine which is reactive at low temperature is isophorone diamine, a bis(aminomethylcyclohexyl)methan,e a polyether diamine, a bis(amino-cyclohexyl)methane, 1,8-diamino-p-menthane or 2,5-diamino-2,5-dimethyl-hexane.

7. The process according to any of Claims 1 to 6 characterized in that the second diamine is diaminodiphenyl sulphone, dicyanodiamide, diaminodiphenyl methane or a liquid diamine which is reactive at low temperature.

**Patentansprüche**

1. Verfahren zum Herstellen einer auf Epoxyharzen basierenden Zusammensetzung, dadurch gekennzeichnet, daß in einem ersten Schritt ein Epoxidprepolymer mit einem Butadien-Acrylnitrilcopolymer, das eine Carboxylgruppe oder mit Aminen reagierende Gruppen aufweist, umgesetzt wird, dann in einem zweiten Schritt das im ersten Schritt erhaltene Produkt bei einer Temperatur von nicht über 27°C mit einem flüssigen, bei dieser Temperatur reagierenden Diamin umgesetzt wird und in einem dritten Schritt das im zweiten Schritt erhaltene Produkt mit einem Epoxidprepolymer in Gegenwart eines zweiten Diamins umgesetzt wird.

2. Modifikation des Verfahrens nach Anspruch 1, dadurch gekennzeichnet, daß die zweiten und dritten Schritte zusammen ausgeführt werden, das im ersten Schritt erhaltene Produkt in einem Schritt bei einer Temperatur von nicht über 27°C mit einem flüssigen, bei dieser Temperatur reagierenden Diamin, einem Epoxidprepolymer und einem zweiten Diamin umgesetzt wird.

3. Verfahren nach Ansprüchen 1 oder 2, dadurch gekennzeichnet, daß das im ersten Schritt verwendete stöchiometrische Verhältnis R1 zwischen Carboxylfunktionen des Butadien-Acrylnitrilcopolymeren und den Oxiranfunktionen von 0,01 bis 0,6 bevorzugt von 0,02 bis 0,5 beträgt.

4. Verfahren nach Ansprüchen 1 bis 3, dadurch gekennzeichnet, daß das stöchiometrische Verhältnis R2 zwischen den Amin- und den Oxiranfunktionen von 0,2 bis 3,5 beträgt, wobei die Aminfunktionen die Funktionen eines flüssigen, bei niedriger Temperatur reagierenden Diamins und die Oxiranfunktionen die anfänglichen Funktionen des Epoxidprepolymers sind.

5. Verfahren nach jedem der Ansprüche 1 bis 4, dadurch gekennzeichnet, daß das stöchiometrische Verhältnis R3 zwischen allen Aminfunktionen und Oxiranfunktionen von 0,5 bis 1,2 beträgt, wobei beim Zählen die Amin- und Oxiranfunktionen, die seit dem Verfahrensbeginn eingeführt wurden, berücksichtigt werden.

6. Verfahren nach jedem der Ansprüche 1 bis 5, dadurch gekennzeichnet, daß das flüssige, bei niedriger Temperatur reagierende Diamin Isophorondiamin, ein Bis(aminomethylcyclohexyl)methan, ein Polyetherdiamin, ein Bis(amino-cyclohexyl)methan, 1,8-Diamino-p-methan oder 2,5-Diamino-2,5-dimethylhexan ist.

7. Verfahren nach jedem der Ansprüche 1 bis 6, dadurch gekennzeichnet, daß das zweite Diamin Diaminodiphenylsulphon, Dicyandiamid, Diaminodiphenylmethan oder ein flüssiges, bei niedriger Temperatur reagierendes Diamin ist.

**Revendications**

1. Procédé de fabrication de composition à base de résines époxy caractérisé en ce que

dans une première étape, on fait réagir un prépolymère époxyde avec un copolymère butadiène-acrylonitrile ayant un groupe acide carboxylique ou des groupes réactifs amine,

puis, dans une deuxième étape, on fait réagir le produit obtenu dans ladite première étape, à une température non supérieure à 27°C, avec une diamine liquide réactive à cette température, et

dans une troisième étape, on fait réagir le produit obtenu dans ladite deuxième étape avec un prépolymère époxyde en présence d'une seconde diamine.

2. Une modification du procédé suivant la revendication 1, dans laquelle on réalise ensemble lesdites deuxième et troisième étapes, en faisant réagir le produit obtenu dans la première étape, en une seule étape, à une température non supérieure à 27°C, avec une diamine liquide réactive à cette température, un prépolymère époxyde et une seconde diamine.

3. Procédé suivant la revendication 1 ou 2, caractérisé en ce que le rapport stoechiométrique $R_1$ entre les fonctions carboxylique du copolymère butadiène-acrylonitrile et les fonctions oxirane utilisées dans la première étape est compris entre 0,01 et 0,6, de préférence entre 0,02 et 0,5.

4. Procédé suivant l'une des revendications 1 à 3, caractérisé en ce que le rapport stoechiométrique $R_2$ entre les fonctions amine et oxirane est compris entre 0,2 et 3,5, les fonctions amine désignant les fonctions d'une diamine liquide réactive à basse température et les fonctions oxirane étant les fonctions initiales du prépolymère époxyde.

5. Procédé suivant l'une des revendications 1 à 4, caractérisé en ce que le rapport stoechiométrique $R_3$ entre toutes les fonctions amine et les fonctions oxirane est compris entre 0,5 et 1,2, les fonctions amine et oxirane étant compatibilisées en tenant compte de toute les fonctions amine et époxyde introduites depuis le départ du procédé.

6. Procédé suivant l'une des revendications 1 à 5, caractérisé en ce que la diamine liquide qui est réactive à basse température est l'isophorone diamine, un bis(aminométhylcyclohexyl)méthane, une polyéther diamine, un bis(amino-cyclohexyl)méthane, le 1,8-diamino-p-menthane ou le 2,5-diamino-2,5-diméthyl-hexane.

7. Procédé suivant l'une des revendications 1 à 6, caractérisé en ce que la seconde diamine est la diaminodiphenyl sulphone, le dicyanodiamide, le diaminodiphénylméthane ou une diamine liquide réactive à basse température.